(19) **Europäisches Patentamt**

**European Patent Office**

**Office européen des brevets**

(11) **EP 1 024 373 A1**

(12) **EUROPÄISCHE PATENTANMELDUNG**

(43) Veröffentlichungstag:
02.08.2000 Patentblatt 2000/31

(51) Int. Cl.$^7$: **G01S 11/14**, B66B 1/34

(21) Anmeldenummer: **00100976.0**

(22) Anmeldetag: **19.01.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.01.1999 DE 19903646**

(71) Anmelder:
**K.A. SCHMERSAL GmbH & Co.**
**D-42279 Wuppertal (DE)**

(72) Erfinder: **Hoepken, Hermann**
**45549 Sprockhövel (DE)**

(74) Vertreter:
**Sparing - Röhl - Henseler**
**Patentanwälte**
**Rethelstrasse 123**
**40237 Düsseldorf (DE)**

(54) **Einrichtung zur Positionserfassung**

(57) Die Erfindung betrifft eine Einrichtung zur Positionserfassung eines längs eines vorgegebenen Verfahrwegs beweglichen Gegenstandes (2), mit einem sich entlang des Verfahrwegs erstreckenden Schallsignalleiter (1) mit vorbestimmter, gleichmäßiger Schallausbreitungsgeschwindigkeit sowie mit einem an dem beweglichen Gegenstand (2) befindlichen Signaleinkoppler (4) zum Einkoppeln eines getakteten Schallsignals in den Schallsignalleiter (1), wobei an wenigstens einem Ende des Schallsignalleiters (1) ein Signalauskoppler (6) angeordnet ist, der mit einer Auswerteeinheit (11) zur Bestimmung der Laufzeit des eingekoppelten Schallsignals von der Einkopplungsstelle zum Signalauskoppler (6) und zur Erzeugung eines für die momentane Position des beweglichen Gegenstandes (2) auf dem Verfahrweg repräsentativen Signals verbunden sind, wobei der Signaleinkoppler (4) als Schallsignal Synchronisationsimpulse (S) mit einer Taktzeit, die größer als die Schallaufzeit von einem Ende des Verfahrwegs zum anderen ist, sowie eine Vielzahl dazwischen befindlicher Zusatzimpulse (M) einkoppelt.

Fig. 2

**Beschreibung**

Die Erfindung betrifft eine Einrichtung zur Positionserfassung eines längs einer vorgegebenen Strecke beweglichen Gegenstandes nach dem Oberbegriff des Anspruchs 1.

Aus EP-A-0 694 792 ist eine derartige Einrichtung zur Positionserfassung eines beweglichen Gegenstandes bekannt, die einen sich entlang eines Verfahrwegs erstreckenden Schallsignalleiter mit vorbestimmter, gleichmäßiger Schallausbreitungsgeschwindigkeit sowie einen mit einem Signalgeber verbundenen, an dem beweglichen Gegenstand befindlichen Signaleinkoppler zum Einkoppeln eines Schallsignals in den Schallsignalleiter aufweist. Hierbei sind an beiden Enden des Schallsignalleiters Signalauskoppler angeordnet, die jeweils mit einem Zähler verbunden sind, wobei die beiden Zähler über einen Taktgeber getaktet und mit einem Subtrahierer für die Ausgangssignale der beiden Zähler verbunden sind. Das Ausgangssignal des Subtrahierers ist als Maß für die Laufzeitdifferenz des eingekoppelten Schallsignals von der Einkopplungsstelle zu den Signalauskopplern von einer Auswerteeinheit zu einem Signal verarbeitbar, das für die momentane Position des beweglichen Gegenstandes auf dem Verfahrweg repräsentativ ist, wobei der Signaleinkoppler mit einer Signalabstandszeit arbeitet, die größer als die Schallaufzeit von einem Ende des Verfahrwegs zum anderen ist. Bei sehr großen Verfahrwegen, wie sie etwa bei Aufzügen in vielgeschossigen Gebäuden auftreten, wobei die Aufzüge häufig zusätzlich mit hoher Geschwindigkeit verfahren werden, ist jedoch die erreichbare Entfernungsauflösung ungenügend.

Aufgabe der Erfindung ist es, eine Einrichtung zur Positionserfassung eines längs einer vorgegebenen Strecke beweglichen Gegenstandes nach dem Oberbegriff des Anspruchs 1 zu schaffen, mit der es möglich ist, einfach und genau die Position des beweglichen Gegenstandes auf einem Verfahrweg großer Länge zu überwachen.

Diese Aufgabe wird entsprechend dem kennzeichnenden Teil des Anspruchs 1 gelöst.

Weitere Ausgestaltungen der Erfindung sind der nachfolgenden Beschreibung und den Unteransprüchen zu entnehmen.

Die Erfindung wird nachstehend anhand eines in den beigefügten Abbildungen schematisch dargestellten Ausführungsbeispiels näher erläutert.

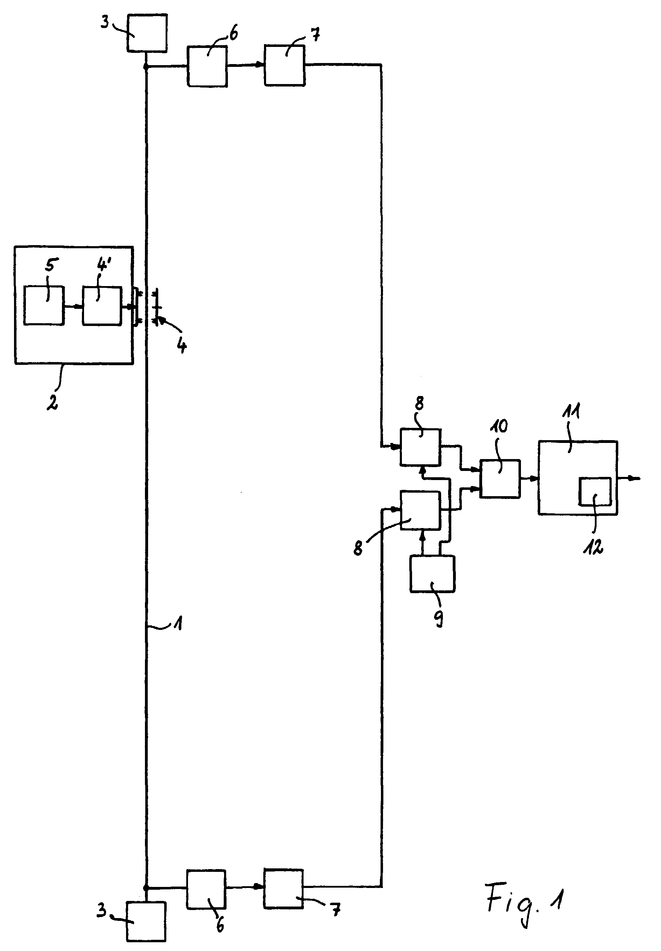

    Fig. 1 zeigt schematisch eine Einrichtung zur Positionserfassung.
    Fig. 2 zeigt ein Zeitschema bezüglich der Signale der Einrichtung von Fig. 1.

Die dargestellte Einrichtung zur Positionserfassung, die insbesondere zur Erfassung der Position eines Fahrstuhlkorbs verwendbar ist, umfaßt einen Schallsignalleiter 1, etwa eine Stahlschiene oder insbesondere einen Draht, der sich längs eines vorgegebenen Verfahrwegs erstreckt, längs dem ein beweglicher Gegenstand 2, etwa ein Fahrstuhlkorb, hin- und herbeweglich ist. Der Schallsignalleiter 1 mit vorbestimmter, gleichmäßiger Schallausbreitungsgeschwindigkeit ist an beiden Enden in einer dämpfenden Einspannung oder Halterung 3 gedämpft eingespannt bzw. gehalten.

Der bewegliche Gegenstand 2 trägt einen Signaleinkoppler 4, der mit einem Signalgeber 5, etwa einem Oszillator, über einen Signalanpassungskreis 4' verbunden ist. Der Signaleinkoppler 4, der insbesondere induktiv arbeitet, koppelt ein Schallsignal, das periodisch ein vom Signalgeber 5 empfangene Synchronisationsimpulse S umfaßt, in den Schallsignalleiter 1 ein. Die Synchronisationsimpulse S besitzen eine Taktzeit größer als die Laufdauer des Schallsignals von einem Ende des Schallsignalleiters 1 zu anderen.

Außerdem koppelt der Signaleinkoppler 4 Zusatzimpulse M ein, und zwar eine Vielzahl von Zusatzimpulsen M während jeder Taktzeit der Synchronisationsimpulse S. Die Taktzeit der Zusatzimpulse M ist derart, daß eine etwa zum Abbremsen und zum Anfahren einer genauen Position durch den Gegenstand 2 benötigte Distanzauflösung in Richtung des Verfahrwegs erreicht wird.

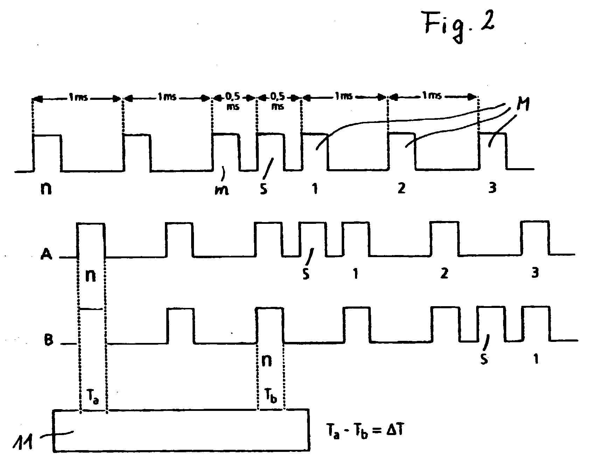

Die Synchronisationsimpulse S sind markiert, d.h. von den Zusatzimpulse M auswertemäßig unterscheidbar. Die Markierung kann beispielsweise dadurch erfolgen, daß ihre Taktzeit ein entsprechendes Vielfaches der Taktzeit der Zusatzimpulse M beträgt und sie bezüglich der Zusatzimpulse M zusätzlich, beispielsweise um eine halbe Taktzeit, zeitversetzt sind, vgl. die vom Signalgeber 5 erzeugte Impulsfolge der ersten Zeile von Fig. 2. Dann folgt einem Synchronisationsimpuls S jeweils eine vorbestimmte Anzahl von Zusatzimpulsen M.

Die Markierung kann aber auch in anderer Weise vorgenommen werden, so können sich die Synchronisationsimpulse S von den Zusatzimpulsen M durch Modulation, Impulsbreite, Impulshöhe od.dgl. unterscheiden.

Bei den einzukoppelnden Synchronisations- und Zusatzimpulsen S, M kann es sich um kurze elektromagnetische Impulse, etwa einfache Pulse oder um Pulsfolgen, oder um eine periodische Frequenzumtastung handeln.

An den Enden des Schallsignalleiters 1 ist jeweils ein Signalauskoppler 6 angeordnet. Hierbei handelt es sich vorzugsweise um einen piezoelektrischen Signalauskoppler 6, jedoch können auch induktiv oder kapazitiv arbeitende verwendet werden.

Jeder Signalauskoppler 6 ist mit einer Signalanpassungsschaltung 7 verbunden, deren Ausgangsleitungen jeweils zu einem Zähler 8 führen. Beide Zähler 8 werden von einem Taktgeber 9, einem Oszillator, getaktet. Die Taktzeit des Taktgebers 9 ist erheblich niedriger als die Laufzeit des Schalls von einem Ende des Schallsignalleiters 1 zum anderen und entsprechend der gewünschten Meßstreckenauflösung gewählt. Die Ausgänge der Zähler 8 werden einem Subtrahierer 10 zugeführt, der die Differenz der Ausgangssignale der Zähler 8 bildet und einer Auswerteeinheit 11, etwa einem Mikroprozessor, zuführt, wo das Ausgangsignal des Subtrahierers 10 ausgewertet wird.

Die Synchronisationsimpulse S dienen dazu, der Auswerteeinheit 11 anzuzeigen, welche nachfolgenden Zusatzimpulspaare zueinander gehören, nämlich die nach dem jeweiligen Synchronisationsimpuls S jeweils n-ten, d.h. ersten, zweiten, dritten usw. an den beiden Signalauskopplern 6 (in Fig. 2 mit A und B bezeichneten) zu unterschiedlichen Zeiten $T_a$ und $T_b$ einkommenden Zusatzimpulse M, damit die Auswerteeinheit 11 die zugehörige absolute Zeitdifferenz $T_a - T_b = \Delta T$ zwischen zusammengehörenden Zusatzimpulsen M und damit die Position des Gegenstandes 2 erfassen bzw. bestimmen kann.

Die Auswertung zur Positionserfassung erfolgt primär in bezug auf die Zusatzsignale M, allerdings können auch die Synchronisationsimpulse S diesbezüglich ausgewertet werden, und zwar vor allem, aber nicht nur dann, wenn der jeweils m-te Zusatzimpulse besonders markiert ist, um so als Synchronisationsimpuls S zu dienen.

Befindet sich der bewegliche Gegenstand 2 in der Mitte zwischen den Signalauskopplern 6, sind die Ausgänge der Zähler 8 gleich und ihre Differenz null. Befindet sich der Gegenstand 2 (bei vertikaler Strecke) oberhalb der Mitte, ist der Ausgang des an den oberen Signalauskoppler 6 angeschlossenen Zählers 8 kleiner als die des anderen. Aus der vom Subtrahierer 10 ermittelten Laufzeitdifferenz der zueinander gehörenden Zusatzimpulse M im Schallsignalleiter 1 und der bekannten Schallgeschwindigkeit in diesem ergibt sich die Entfernung des beweglichen Gegenstandes 2 von der Mitte. Da dann, wenn sich der bewegliche Gegenstand 2 unterhalb der Mitte befinden würde, die Differenz ein anderes Vorzeichen haben würde, ist auch bekannt, ob sich der beweglichen Gegenstand 2 oberhalb oder unterhalb der Mitte befindet, d.h. damit ist die genaue Lage des beweglichen Gegenstandes 2 errechenbar. Ein so von der Auswerteeinheit 11 erzeugbares, digitales oder analoges Positionssignal kann zur Nachfolgesteuerung verwendet werden.

Eine Überwachungsschaltung 12 der Auswerteeinheit 11 kann zur einfachen Überwachung der Meßstrecke bei einer zeitkonstanten Einkopplung des Einkoppelsignals verwendet werden. Bei einer Verschmutzung, die in der Lage ist, das Signal auf dem Schallsignalleiter 1 zu bedämpfen, überschreitet die vom Subtrahierer 10 festgestellte Differenz einen vorbestimmten Wert, auf die die Überwachungsschaltung 12 anspricht, um ein entsprechendes Warnsignal od.dgl. auszulösen.

Die Schallgeschwindigkeit in einem Schallsignalleiter 1 aus Stahl liegt bei etwa 5300 m/s. Bei einer zeitlichen Auflösung von 188 ns, wozu eine Taktgeberfrequenz von 5,3 MHz notwendig ist, liegt die Ortsauflösung der Meßstrecke bei 1 mm.

Anstatt mit dem Signalgenerator verbunden zu sein, kann der Signaleinkoppler 4 auch von außen etwa durch die Auswerteeinheit 11 getriggert werden, um die Schallsignale in den Schallsignalleiter 1 einzukoppeln. Umgekehrt kann auch der Signaleinkoppler 4 über ein elektrisches Signal die Auswerteeinheit 11 triggern, um den zeitlichen Beginn des jeweiligen Einkoppelns des Schallsignals in den Schallsignalleiter 1 für die Auswertung durch die Auswerteeinheit 11 festzulegen.

Auch kann man gegebenenfalls mit nur einem Signalauskoppler 6 auskommen, anstatt an jedem Ende des Schallsignalleiters 1 jeweils einen Signalauskoppler 6 anzuordnen.

**Patentansprüche**

1. Einrichtung zur Positionserfassung eines längs eines vorgegebenen Verfahrwegs beweglichen Gegenstandes (2), mit einem sich entlang des Verfahrwegs erstreckenden Schallsignalleiter (1) mit vorbestimmter, gleichmäßiger Schallausbreitungsgeschwindigkeit sowie mit einem an dem beweglichen Gegenstand (2) befindlichen Signaleinkoppler (4) zum Einkoppeln eines getakteten Schallsignals in den Schallsignalleiter (1), wobei an wenigstens einem Ende des Schallsignalleiters (1) ein Signalauskoppler (6) angeordnet ist, der mit einer Auswerteeinheit (11) zur Bestimmung der Laufzeit des eingekoppelten Schallsignals von der Einkopplungsstelle zum Signalauskoppler (6) und zur Erzeugung eines für die momentane Position des beweglichen Gegenstandes (2) auf dem Verfahrweg repräsentativen Signals verbunden sind, **dadurch gekennzeichnet**, daß der Signaleinkoppler (4) als Schallsignal Synchronisationsimpulse (S) mit einer Taktzeit, die größer als die Schallaufzeit von einem Ende des Verfahrwegs zum anderen ist, sowie eine Vielzahl dazwischen befindlicher Zusatzimpulse (M) einkoppelt.

2. Einrichtung nach Anspruch 1, dadurch gekennzeichnet, daß die Synchronisationsimpulse (S) gegenüber den Zusatzimpulsen (M) markiert sind.

3. Einrichtung nach Anspruch 1 oder 2, dadurch gekennzeichnet, daß der Takt der Synchronisationsimpulse (S) gegenüber demjenigen der Zusatzimpulsen (M) zeitversetzt ist.

4. Einrichtung nach einem der Ansprüche 1 bis 3, dadurch gekennzeichnet, daß die Synchronisationsimpulse (S) und die Zusatzimpulse (M) zur Bestimmung der Zeitlaufdifferenz der Auswerteeinheit (11) zugeführt werden.

**5.** Einrichtung nach einem der Ansprüche 1 bis 4, dadurch gekennzeichnet, daß der Ausgang des Signalauskopplers (6) an einen von einem Taktgeber (9) getakteten Zähler (8) gekoppelt ist.

**6.** Einrichtung nach Anspruch 5, dadurch gekennzeichnet, daß an jedem Ende des Schallsignalleiters (1) ein Signalauskoppler (6) angeordnet ist.

**7.** Einrichtung nach Anspruch 6, dadurch gekennzeichnet, daß die Ausgänge der beiden Signalauskoppler (6) jeweils an einen Zähler (8) gekoppelt, die beiden Zähler (8) über einen Taktgeber (9) getaktet und mit einem Subtrahierer (10) für die Ausgangssignale der beiden Zähler (8) verbunden sind.

**8.** Einrichtung nach einem der Ansprüche 5 bis 7, dadurch gekennzeichnet, daß der Taktgeber (9) für den Zähler (8) mit einem für eine vorgesehene Meßstreckenauflösung notwendigen Mindestfrequenz arbeitet.

**9.** Einrichtung nach einem der Ansprüche 1 bis 8, dadurch gekennzeichnet, daß der Signalauskoppler (6) ein piezoelektrischer, kapazitiver oder induktiver Auskoppler ist.

**10.** Einrichtung nach einem der Ansprüche 1 bis 9, dadurch gekennzeichnet, daß der Schallsignalleiter (1) ein sich entlang des Verfahrwegs erstreckender metallischer Körper ist.

**11.** Einrichtung nach Anspruch 10, dadurch gekennzeichnet, daß der Schallsignalleiter (1) eine Metallschiene ist.

**12.** Einrichtung nach Anspruch 10, dadurch gekennzeichnet, daß der Schallsignalleiter (1) ein Draht ist.

**13.** Einrichtung nach einem der Ansprüche 1 bis 12, dadurch gekennzeichnet, daß der Signaleinkoppler (4) ein induktiver Einkoppler ist.

**14.** Einrichtung nach einem der Ansprüche 6 bis 13, dadurch gekennzeichnet, daß die Auswerteeinheit (11) eine Überwachungsschaltung (12) umfaßt, die ein Warnsignal auslöst, wenn die von einem Subtrahierer (10) festgestellte Differenz der Zähler (8) einen vorbestimmten Wert überschreitet.

**15.** Einrichtung nach einem der Ansprüche 1 bis 14, dadurch gekennzeichnet, daß der bewegliche Gegenstand (2) ein Aufzugkorb ist.

**16.** Einrichtung nach einem der Ansprüche 1 bis 15, dadurch gekennzeichnet, daß der Signaleinkoppler (4) mit einem Signalgeber (5) verbunden ist.

**17.** Einrichtung nach einem der Ansprüche 1 bis 15, dadurch gekennzeichnet, daß der Signaleinkoppler (4) von außen, insbesondere durch die Auswerteeinheit (11) über ein elektrisches Signal triggerbar ist.

**18.** Einrichtung nach einem der Ansprüche 1 bis 15, daß die Auswerteeinheit (11) vom Signaleinkoppler (4) durch ein elektrisches Signal triggerbar ist.

**19.** Einrichtung nach einem der Ansprüche 1 bis 18, dadurch gekennzeichnet, daß der Schallsignalleiter (1) an beiden Enden gedämpft gehalten ist.

Fig. 1

Fig. 2

Europäisches
Patentamt

**EUROPÄISCHER RECHERCHENBERICHT**

Nummer der Anmeldung

EP 00 10 0976

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | EP 0 694 792 A (SCHMERSAL K A GMBH & CO) 31. Januar 1996 (1996-01-31) * das ganze Dokument * | 1,2,4-19 | G01S11/14 B66B1/34 |
| Y | DE 42 29 079 A (VEGA GRIESHABER GMBH & CO) 3. März 1994 (1994-03-03) * das ganze Dokument * | 1,2,4-19 | |
| Y | US 4 606 015 A (YAMAGUCHI KENICHI) 12. August 1986 (1986-08-12) * das ganze Dokument * | 1,2,4-19 | |
| | | | RECHERCHIERTE SACHGEBIETE (Int.Cl.7) |
| | | | G01S B66B |

Der vorliegende Recherchenbericht wurde für alle Patentansprüche erstellt

| Recherchenort | Abschlußdatum der Recherche | Prüfer |
|---|---|---|
| MÜNCHEN | 12. April 2000 | Kahn, K-D |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 10 0976

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-04-2000

| Im Recherchenbericht angeführtes Patentdokument | | Datum der Veröffentlichung | Mitglied(er) der Patentfamilie | | Datum der Veröffentlichung |
|---|---|---|---|---|---|
| EP 0694792 | A | 31-01-1996 | DE | 4426793 C | 26-10-1995 |
| | | | DE | 59504960 D | 11-03-1999 |
| | | | US | 5736695 A | 07-04-1998 |
| DE 4229079 | A | 03-03-1994 | KEINE | | |
| US 4606015 | A | 12-08-1986 | JP | 59037459 A | 29-02-1984 |
| | | | EP | 0102074 A | 07-03-1984 |

EPO FORM P0461

Für nähere Einzelheiten zu diesem Anhang : siehe Amtsblatt des Europäischen Patentamts, Nr.12/82